# EUROPÄISCHE PATENTSCHRIFT

(11) **EP 2 012 926 B1**
(45) Veröffentlichungstag und Bekanntmachung des Hinweises auf die Patenterteilung: **07.06.2017**
(21) Anmeldenummer: 07724267.5
(22) Anmeldetag: 16.04.2007
(51) Int. Cl.: B02C 18/14, B02C 18/08, B02C 19/00, B30B 9/32, B29B 17/00

(54) **EINHEIT ZUM KOMPAKTIEREN VON HOHLKÖRPERN**
UNIT FOR COMPACTING HOLLOW BODIES
UNITE DE COMPACTAGE DE CORPS CREUX

(30) Priorität: 21.04.2006 DE 102006019163; 18.07.2006 DE 102006033615
(43) Veröffentlichungstag der Anmeldung: 14.01.2009
(73) Patentinhaber: Scharfen, Hermann, 44803 Bochum (DE)
(72) Erfinder: Scharfen, Hermann, 44803 Bochum (DE)
(74) Vertreter: Kalkoff & Partner
(86) Internationale Anmeldenummer: PCT/EP2007/003329
(87) Internationale Veröffentlichungsnummer: WO 2007/121882

(56) Entgegenhaltungen:
- EP-A- 0 534 630
- EP-A- 1 356 920
- DE-A1- 2 606 263
- DE-U1- 20 111 752
- FR-A- 2 711 552
- JP-A- 4 147 796
- JP-A- 2004 001 049
- US-A- 4 195 562

## Beschreibung

Die vorliegende Erfindung betrifft eine Einheit zum Kompaktieren von Hohlkörpern wie Glas-, Kunststoff- oder Metallbehältern, z. B. Getränkegebinden, welche beim Kompaktieren eine bleibende Verformung erfahren. Die erzielte Kompaktierung bringt eine bleibende räumliche Verkleinerung, so daß eine kostengünstige Lagerung und Transporterleichterung des Preßgutes erzielt wird und gleichzeitig evtl. angebrachte Kontrollmarken auf dem Hohlkörper zerstört werden.

Entsprechende Hohlkörpergebinde werden beispielsweise für Getränkegebinde aus Plastik oder Metall verwendet, die in großen Mengen anfallen. Diese Gebinde werden oft aus Bequemlichkeit nicht der Abfallentsorgung zugeführt. Daher hat der Gesetzgeber, um dieses Übel auszuschalten, jedes Getränkegebinde mit Pfand belegt. Jedes Getränkegebinde wird zusätzlich mit Kontrollmarken versehen. Bei Rückgabe des Getränkegebindes wird das erhobene Pfand zurückerstattet. Um eine zweite Rückgabe eines Getränkegebindes zu verhindern, sollen u. a. das Getränkegebinde zerstört und die angebrachten Kontrollmarken unbrauchbar gemacht werden.

Aus der DE 10325368 B₄ ist hierzu eine Kompaktiereinheit bekannt, die mit zwei Walzen mit aufragenden, hakenförmigen Schneiden zum Einziehen und Verweben des Preßgutes ausgerüstet ist und durch parallele, synchron gegenlaufende Anordnung der Walzen kompaktiert. In diesem Zusammenhang ist unter dem Begriff "kompaktieren" verstanden, daß der Hohlkörper gepreßt, gelocht und ggf. durch die Lochung so verwebt bzw. vercrimpt wird, daß der so gepreßte Hohlkörper dauerhaft in seiner gepreßten Form bleibt.

Bei derartigen Einheiten werden die Wände des Hohlkörpers beim Austritt des zusammengepreßten Hohlkörpers aus der Vorrichtung oft wieder auseinandergezogen, da die Haken der Walzen sich ab der Mitte der Walzen nach außen drehen und die Schneiden auseinandertreiben. Dadurch wird das Volumen des Leergutes zum Lagern oder Transport wieder vergrößert.

In der WO 2004/096532 A1 ist eine Vorrichtung zum Zusammendrücken leerer Behälter, insbesondere von Getränkeflachen oder - dosen aus Kunststoff oder Weißblech beschrieben. In einem Gehäuse ist eine Schneid- und Presseinheit mit zwei in ihren Drehachsen voneinander beabstandeten Walzen angeordnet, die mehrere im Wechsel aufeinander folgende Abschnitte unterschiedlichen Durchmessers aufweisen. Die Walzen sind zueinander versetzt und mit ihren Umfangsflächen teilweise kämmend angeordnet.

Die US 5,111,927 beschreibt eine Vorrichtung zum Recyceln von Getränkebehältern mit einem ersten Modul zur Aufnahme und Handhabung von Plastikbehältern, einem zweiten Modul zur Aufnahme und Handhabung von Glasbehältern und einem dritten Modul zur Aufnahme und Handhabung von Metallbehältern. Jedes der Module ist im selben Gehäuse angeordnet, wobei die Module auf Schienen ausfahrbar sind. Die Behälter werden in einem Solenoid-Brechwerk zusammengedrückt, wobei ein elektrischer Pulsbetrieb für eine gleichmäßige Beaufschlagung verwendet wird.

Die US 5,195,429 beschreibt eine Baugruppe zum Perforieren, Zusammendrücken und Ballenpressen von zusammendrückbaren Objekten, die aus einem Aufgabetrichter auf ein Förderband gegeben werden. Eine Perforationsvorrichtung umfasst eine Walze mit Perforationselementen. Eine gebogene Platte mit Schlitzen bildet einen Spalt mit der Walze und ist durch eine Feder-Baugruppe beaufschlagt.

Die DE 197 27 750 B₄ beschreibt ein Verfahren und eine Vorrichtung zum Zerkleinern von Gegenständen, insbesondere von zylindrischen Körpern wie bspw. Kunststoffflaschen. Um diese möglichst weitgehend zu Schnipseln zu zerkleinern, die ohne Schwierigkeit einer Weiterverarbeitung zugeführt werden können, werden die Gegenstände zunächst streckenweise von einem ersten Walzenpaar eingeschnitten und danach von einem Paar Schneidwalzen durchgeschnitten.

In der DE 89 10 922.8 ist ein Messerwerk für einen Abfallzerkleinerer beschrieben. Um das zu zerkleinernde Gut in Partikel bestimmter Größe zu zerschneiden, sind zwei parallel nebeneinander angeordnete, gegenläufig angetriebene Messerwellen in einem Messerwerkrahmen gelagert. Auf Sechskantwellen sind Messerscheiben der beiden Messerwellen aufgesetzt. Das zu zerkleinernde Gut wird von Messerzähnen der Messerscheiben erfasst und streifenförmige Abschnitte definierter Länge und Breite aus dem Schneidgut herausgetrennt.

Die vorliegende Erfindung soll den Aufbau einer Kompaktiereinheit vereinfachen. Außerdem soll ein Auseinanderziehen der aneinandergepreßten und verwobenen Wandabschnitte des Hohlkörpers verhindert werden.

Die Aufgabe wird durch eine Kompaktiereinheit Anspruch 1 sowie eine Kompaktieranlage gemäß Anspruch 5 gelöst. Bevorzugte Weiterbildungen sind in den Unteransprüchen enthalten.

Durch die vorliegende Erfindung wird eine in der Herstellung kostengünstige und wartungsfreundliche Kompaktiereinheit ermöglicht. Die Kompaktiereinheit benötigt hierzu lediglich eine antreibbare Walze mit vorstehenden Elementen. Die Elemente wirken mit einer Gegenplatte als nicht angetriebenes Gegenlager so zusammen, daß ein Hohlkörper, wie bspw. eine Kunststoffflasche oder eine Getränkedose, durch die Rotation der Walze eingezogen und zerdrückt wird. Hierzu ist zwischen der Oberfläche des Gegenlagers und der Walze ein entsprechend der zu kompaktierenden Hohlkörper gewählter Spalt gebildet. Die Elemente können bevorzugt als Schneiden oder Zähne ausgebildet sein.

Um gleichzeitig eine Entwertung bzw. teilweise Zerstörung des Hohlkörpers zu erreichen, greifen die vorstehenden Elemente der Walze bei der Rotation dieser in mindestens eine Vertiefung des Gegenlagers teilweise kammartig ein, wodurch ein eingezogener Hohlkörper an dieser Stelle perforiert wird. Eine Perforation ist insbesondere auch deshalb notwendig, um in der Regel in dem Hohlkörper enthaltene Luft oder Flüssigkeit zu entleeren. In Drehrichtung dem Gegenlager nachgelagert ist ein Abstreifer angeordnet, der die kompaktieren Hohlkörper von der Walze trennt. Hierzu weist der Abstreifer ebenfalls mindestens eine Vertiefung auf, in die die Elemente der Walze bei der Rotation mindestens teilweise kammartig eingreifen. Zwar sollte sowohl bei dem Eingriff der Elemente mit dem Gegenlager als auch mit dem Abstreifer der Abstand zwischen den Elementen und Gegenlager bzw. Abstreifer so gewählt sein, daß diese sich nicht berühren. Um eine zuverlässiges Abstreifen zu erreichen, sollte der Abstand zwischen den Elementen der Walze und Abstreifer jedoch so gering sein, daß kein kompaktierter Hohlkörper zwischen Walze und Abstreifer gelangen kann.

Da derartige Kompaktiereinheiten nicht nur von fachkundigem Personal bedient werden, kann es in der Anwendung durchaus zu Fehleinwürfen kommen. Beispielsweise ist es durchaus möglich, daß ein nicht kompaktierbarer Gegenstand, wie bspw. ein in einem Hohlkörper enthaltener Stein, in die Einheit gelangt.

Erfindungsgemäß ist die Gegenplatte daher in diesem Fall von einer ersten in eine zweite Position bewegbar. Ein nicht kompaktierbarer Gegenstand kann bspw. ein Stein oder eine Schraube sein. Durch ein derartiges Ausweichen des Gegenlagers wird der Verschleiß bei Fehleinwürfen reduziert und eine Zerstörung der Kompaktiereinheit vorteilhaft vermieden. In der zweiten Position sollte der Abstand zwischen Walze und Gegenplatte derart gegenüber der ersten Position vergrößert sein, daß der nicht kompaktierbare Gegenstand die Einheit passieren kann. Die zweite Position kann somit in variablem Abstand zur ersten Position liegen, je nach Größe des eingegebenen, nicht kompaktierbaren Gegenstandes. Nachdem der nicht kompaktierbare Gegenstand die Einheit passiert hat, sollte die Gegenplatte wiederum in die erste Position verlagert werden, um in den normalen Betriebszustand zurückzukehren.

Erfindungsgemäß ist die Gegenplatte federbelastet von der ersten Position in die zweite Position bewegbar. Hierdurch ist eine automatische Bewegung des Gegenlagers gegeben, wenn ein nicht kompaktierbarer Gegenstand in die Einheit gelangt. Nachdem der nicht kompaktierbare Gegenstand die Kompaktiereinheit passiert hat, bewegt sich das Gegenlager in die erste Position zurück. Die Federkraft sollte so gewählt sein, daß das Gegenlager im normalen Betrieb in der ersten Position verbleibt und nur bei einem Fehleinwurf in die zweite Position ausweicht. Besonders bevorzugt können eine oder mehrere Kunststoffstabfedern aus einem kompressionsfähigen Material verwendet werden, um die Federkraft bereitzustellen.

Die erfindungsgemäße Ausbildung des Gegenlagers als Gegenplatte erlaubt eine kostengünstige Herstellung der Kompaktiereinheit. Bevorzugt weist die Gegenplatte nebeneinander beabstandete Rillen auf, in die die vorstehenden Elemente der Walze eingreifen. Die Rillen sollten hierbei mindestens in dem Bereich in der Gegenplatte ausgebildet sein, der mit den vorstehenden Elementen der Walze in Eingriff kommt. Bevorzugt ist es, daß die Rillen entlang der gesamten Gegenplatte ausgebildet sind. Hierdurch ist die Herstellung weiter vereinfacht. Derartige Rillen können bspw. durch spanende Bearbeitung der Gegenplatte gebildet sein. Naturgemäß ist es auch möglich, fingerartige Streifen auf die Grundplatte aufzusetzen, um so zwischenliegende Rillen zu bilden.

Bevorzugt sind auf der Walze in Axialrichtung beabstandete Elemente angeordnet, die im Betrieb in mehrere Vertiefungen in Gegenlager und Abstreifer eingreifen. Hierdurch kann eine Perforation des Hohlkörpers an mehreren Stellen erreicht werden, was vorteilhaft ist. Ferner ist es bevorzugt, daß in Umfangsrichtung auf der Walze mehrere Elemente hintereinander beabstandet gebildet sind, um die Perforation weiter zu verbessern.

Erfindungsgemäß weist die Walze einzelne scheibenförmige Segmente auf, die auf einer gemeinsamen Achse in Axialrichtung nebeneinander angeordnet sind. Diese scheibenförmigen Segmente weisen jeweils mindestens ein vorstehendes Element auf. Dadurch ist es ermöglicht, im Verschleißfalle einzelne Segmente der Walze in einfacher Weise auszutauschen. Das Ersetzen der gesamten Walze kann somit vermieden werden. Die Segmente sollten hierfür eine entsprechend drehsicher ausgestaltete Bohrung aufweisen, um diese auf der Achse befestigen zu können. Bevorzugt sollten die Segmente je mehrere, in Umfangsrichtung hintereinander beanstandete Elemente aufweisen, wie vorstehend erläutert.

Insbesondere bevorzugt sind die vorstehenden Elemente als hakenförmige Schneiden ausgebildet. Hierdurch können die Perforationseigenschaften der Kompaktiereinheit weiter verbessert werden.

Eine Kompaktieranlage mit einer Einheit zum Kompaktieren von Hohlkörpern, wie vorstehend beschrieben, weist mindestens eines der nachfolgend genannten Elemente auf: Zufuhreinrichtung, Antrieb, Steuereinrichtung, Detektionseinrichtung, Gehäuse, Sammelbehälter.

Eine entsprechende Zufuhreinrichtung weist eine Einfüllvorrichtung und etwaige Bewegungsmittel auf, um einen eingegebenen Hohlkörper zur Kompaktiereinheit zu führen. Um eine Rückgabe des entsprechenden Pfandes zu ermöglichen, kann eine Detektionseinrichtung vorgesehen sein. Diese Detektionseinrichtung erkennt, ob ein Hohlkörper eingegeben ist und weiterhin den Typ des Hohlkörpers. Somit kann der entsprechende zu erstattende Pfand ermittelt werden. Auch sollte die Detektionseinrichtung eingegebene nicht kompaktierbare Gegenstände feststellen und sodann die Kompaktieranlage stillegen. Die Steuereinrichtung dient zur Steuerung des Ablaufs des Kompaktiervorgangs und kann durch alle gängigen Steuerungsmittel gebildet sein, bspw. eine SPS-oder eine Mikroprozessorsteuerung. Insbesondere steuert die Steuereinrichtung den Antrieb, welcher die Walze antreibt. Dieser kann bevorzugt ein Elektromotor sein. Nach erfolgter Kompaktierung wird der kompaktierte Hohlkörper in dem Sammelbehälter aufgefangen. Insbesondere wenn auch Glasgebinde kompaktiert, bzw. zerkleinert werden sollen, ist ein Gehäuse vorteilhaft, da keine Glassplitter in die Umgebung gelangen können.

Da bei längerer Betriebszeit oder in Sommermonaten eine Erwärmung der Kompaktieranlage eintritt, kann es, bedingt durch aus dem Hohlkörpern austretende Flüssigkeitsreste, zu einer Keimbildung innerhalb der Kompaktieranlage und dadurch zu einer erheblichen Geruchsentwicklung kommen. Da derartige Kompaktieranlagen üblicherweise innerhalb eines geschlossenen Raumes, wie eines Verkaufsraumes aufgestellt sind, ist eine Geruchsbelästigung störend.

Die Kompaktieranlage kann daher bevorzugt eine entsprechende Kühlung aufweisen. Die Kühlung kann beispielsweise als Luftkühlung ausgebildet sein und somit das Gehäuse der Kompaktieranlage im Betrieb mit gekühlter Luft versorgen. Da hier in der Regel durch die gekühlte Luft eine Konvektion auftritt, wird die Anlage gleichmäßig durchströmt. Es ist jedoch ebenfalls denkbar, verstellbare Düsen vorzusehen, welche bspw. Walze und Gegenlager in besonderem Maße kühlen. Durch eine Luftkühlung kann als vorteilhafter Nebeneffekt auch eine Kühlung der Antriebsmotoren der Kompaktieranlage erreicht werden. Alternativ wäre es denkbar, die Kompaktiereinheit direkt zu kühlen, bspw. indem die Walze und das Gegenlager über entsprechende Kühlelemente gekühlt sind, da hier mit einer besonders hohen Keimbildung zu rechnen ist. Damit eine Geruchsbelästigung vermieden wird, sollte das Gehäuse der Kompaktieranlage bevorzugt gegenüber der Umgebung abgedichtet sein. Eine Entlüftung könnte dann über einen Entlüftungsschlauch vorgesehen werden.

Alternativ zu einer Kühlung kann die Kompaktieranlage weiterhin bevorzugt mit ungekühlter Luft durchströmt sein. Hierzu könnte bspw. ein entsprechendes Gebläse Raumluft in die Kompaktieranlage eingeben, welche dann über einen entsprechenden Entlüftungsschlauch "ins Freie" entlüftet ist. In diesem Fall sollte auf eine besondere Dichtigkeit der Anlage geachtet werden. Durch die Verwendung von ungekühlter Luft wird zwar nur eine geringe Reduktion der Keimbildung erreicht, durch das kontrollierte Be- und Entlüften der Anlage entsteht jedoch keine Geruchsbelästigung in der Umgebung, wie bspw. in einem Verkaufsraum, in der die Anlage aufgestellt ist. Da bei einer entsprechenden Durchströmung mit ungekühlter Luft nur geringe Konvektion auftritt, sollten insbesondere bevorzugt Luftleitbleche oder justierbare Düsen in der Anlage angeordnet sein, um eine gute Durchströmung zu gewährleisten.

Ausführungsbeispiele der Erfindung sind in den Zeichnungen erläutert.

Es zeigen:
- Fig. 1a und b: Ausführungsbeispiele der Erfindung schematisiert in Seitenansicht,
- Fig. 2: ein Ausführungsbeispiel einer Schneidscheibe mit hakenförmigen Schneiden in Seitenansicht zum Einsatz in einer erfindungsgemäßen Einheit zum Kompaktieren,
- Fig. 3: ein Ausführungsbeispiel einer Walze zum Einsatz in einer erfindungsgemäßen Kompaktiereinheit,
- Fig. 4a und b: weitere Ausführungsbeispiele der Erfindung schematisiert in Seitenansicht, sowie
- Fig. 5: eine schematische Ansicht eines Ausführungsbeispiels einer Kompaktieranlage.

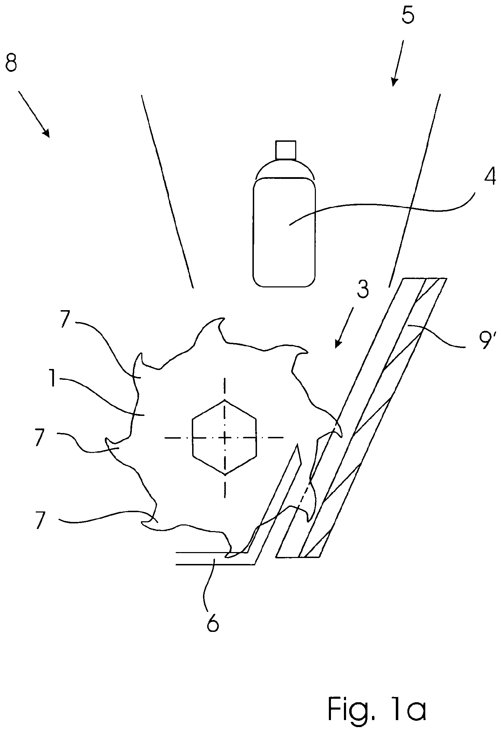

In Fig. 1a ist ein Ausführungsbeispiel einer Einheit zum Kompaktieren 8 gezeigt. In der Fig. 1a ist eine von einer nicht gezeigten Antriebseinheit angetriebene, mit aufragenden hakenförmigen Schneiden 7 ausgerüstete Walze 1 und eine als Nutenwand ausgebildete Gegenplatte 9', in der die Schneiden 7 der Walze 1 in die Nuten eingreifen, dargestellt. Die Nuten verlaufen entlang der Längsachse der Gegenplatte 9' in der der Walze 1 zugewandten Seite. Das Preßgut 4, hier eine PET-Flasche, wird in die Spalte 3 der Befüllvorrichtung 5 eingeführt, und durch die Rotation in dargestellter Richtung eingezogen. Das Preßgut 4 wird in der Spalte 3 zerdrückt und der Mantel des Preßgutes 4 wird durch die hakenförmigen Schneiden 7 perforiert. Gleichzeitig werden die gegenüberliegenden Außenwände des Preßgutes 4 miteinander verklammert. Zum Abstreifen des gepreßten Preßgutes 4 ist auf der Auslaßseite der Vorrichtung ein Abstreifer 6 mit darin gebildeten Nuten angeordnet. Ähnlich zu der Gegenplatte 9' greifen die Schneiden 7 der Walze 1 in die Nuten des Abstreifers 6 ein.

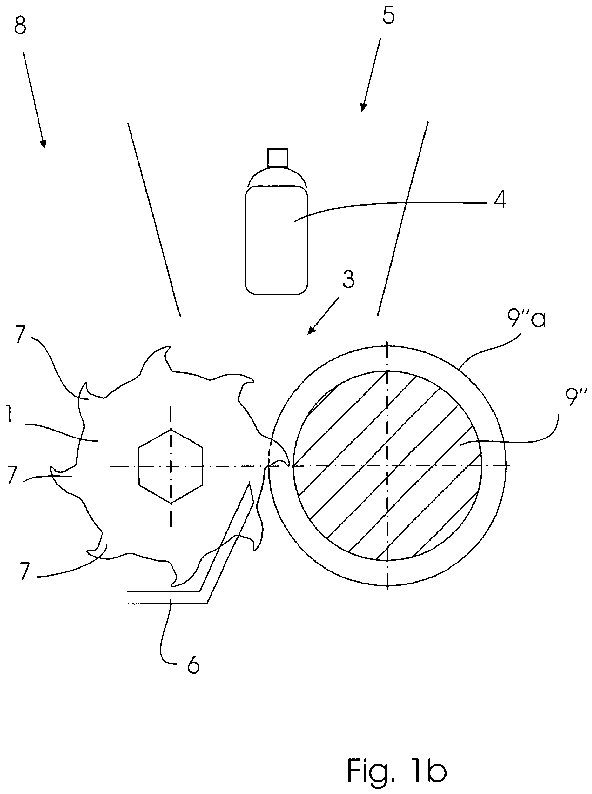

In ähnlicher Weise ist in der Fig. 1b ein weiteres Ausführungsbeispiel einer Kompaktiereinheit 8 gezeigt. Die im vorherigen Ausführungsbeispiel mit der Walze 1 zusammenwirkende Gegenplatte 9' ist hier durch eine als Nutenrolle ausgebildete Gegenwalze 9" ersetzt, welche in Umfangsrichtung verlaufende Nuten aufweist, angedeutet durch die Außenlinie 9"a. Vorteilhaft ist die Gegenwalze 9" jedoch nicht angetrieben. Die Gegenwalze 9" kann jedoch drehbar gelagert ausgeführt sein, um den Kompaktiervorgang zu verbessern. In diesem Fall kann die Gegenwalze 9" durch das Preßgut 4, welches in dem Spalt 3 eingegeben ist, bewegt werden.

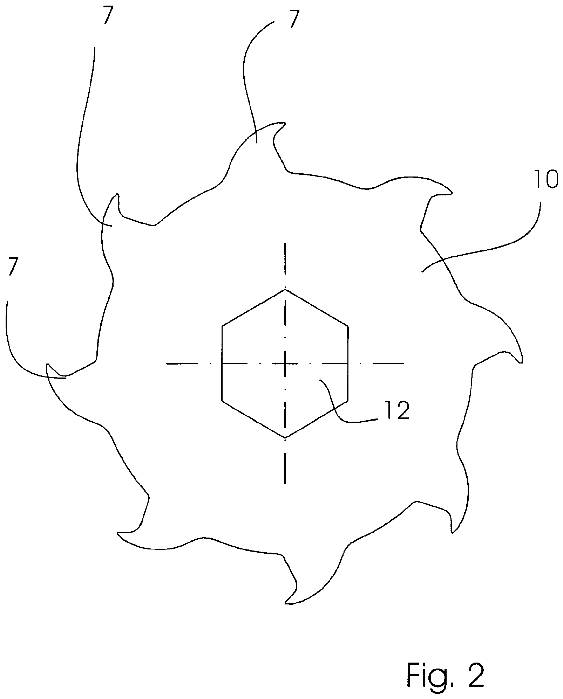

Kostensparend ist insbesondere, daß die Walzen nicht aus einer kompakten Einheit hergestellt werden, sondern aus Scheiben 10, die mit Schneiden versehen sind und mit Distanzscheiben auf einer gemeinsamen Achse zusammengebaut werden. Ein Ausführungsbeispiel einer derartigen Schneidscheibe 10 ist in Fig. 2 gezeigt. Die Scheibe 10 besteht aus gehärtetem Stahl und weist an ihrem Umfang angeformte zahnförmige Schneidelemente 7 auf. Zur drehfesten Verbindung auf einer Walzenachse weist die Scheibe 10 eine Sechskantbohrung 12 auf. Diese Sechskantbohrung 12 kann naturgemäß auch anderweitig ausgeführt sein, solange diese drehsicher ist, bspw. als Mehrkantbohrung.

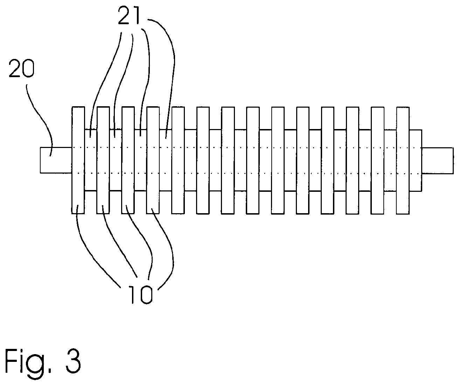

Ein Ausführungsbeispiel einer Walze 20 mit aufgesetzten Schneidscheiben 10 ist in Fig. 3 dargestellt. Die Schneidscheiben 10 sind, wie zuvor beschrieben, mit Distanzscheiben 21 beabstandet auf der Walze 20 angebracht. Die Dicke der Distanzscheiben 21 sollte gemäß des Perforationsabstandes des Preßgutes 4 gewählt sein. Durch diese modulare Ausführung kann insbesondere die Wartung der Kompaktiereinheit verbessert werden, da verschlissene Scheiben 10 einzeln ausgewechselt werden können, ohne die gesamte Walze 20 zu wechseln. Bei der Anwendung zur Kompaktierung von Getränkebehältnissen kann in der Regel auch nicht vermieden werden, daß evtl. in den Gebinden enthaltene Fremdgegenstände, wie Steine oder Schrauben in die Kompaktiereinheit gelangen.

Da auch hier der dadurch auftretende Verschleiß nur in einem kleinen Bereich auftritt und die betroffenen Schneidscheiben 10 einfach gewechselt werden können, ist der modulare Aufbau auch diesbezüglich vorteilhaft.

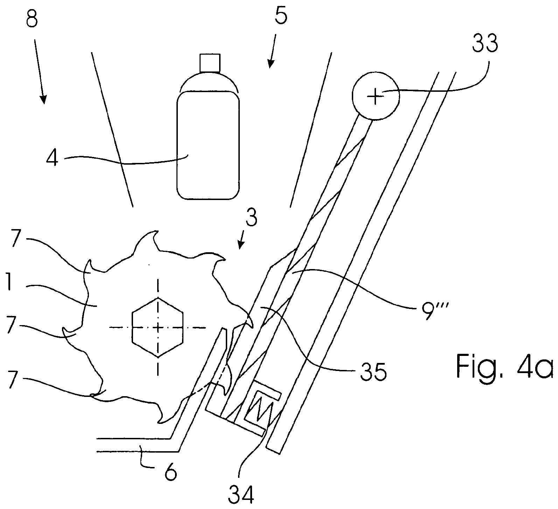

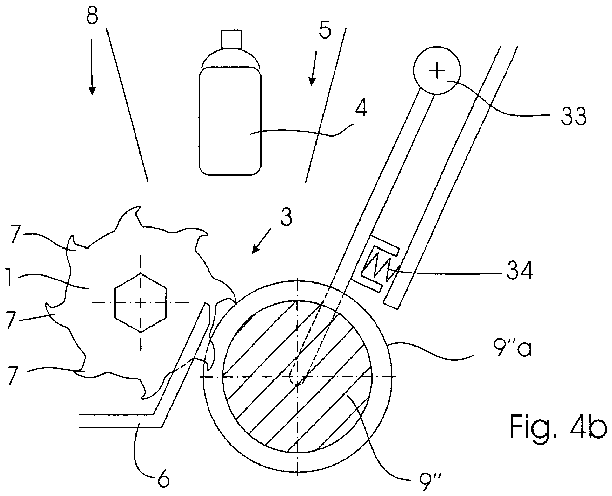

Fig. 4a und 4b zeigen weitere Ausführungsbeispiele der Erfindung. Die in den Fig. 4a und 4b gezeigten Ausführungsbeispiele sind analog zu den in den Fig. 1a und 1b gezeigten Ausführungsbeispielen. Korrespondierende Teile wurden daher mit gleichen Bezugszeichen versehen. Wie der Fig. 4a zu entnehmen ist, weist die als Nutenwand ausgebildete Gegenplatte 9'" nur im Bereich des Eingriffs mit den hakenförmigen Schneiden 7 der Walze 1 entsprechend ausgeformte Nuten 35 auf. Ferner ist die Gegenplatte 9'" über ein Lager 33 schwenkbar gelagert. Eine kompressionsfähige Kunststoffeder 34 sorgt für eine Anpresskraft, so daß die hakenförmigen Scheiden 7 der Walze 1 in Eingriff mit den Nuten der Gegenplatte 9'" stehen. Die Feder 34 ist hierbei so eingestellt, daß im Falle des Einwurfs eines nicht kompaktierbare Fremdgegenstands, die Gegenplatte 9'" wegschwenkt, und so den Fremdgegenstand passieren läßt. Durch diese Ausbildung können Beschädigungen an der Walze 1 oder der Gegenplatte 9'" vermieden werden.

In ähnlicher Weise ist die als Nutenrolle ausgebildete Gegenwalze 9" in Fig. 4b schwenkbar um das Lager 33 gelagert. Auch hier ist eine Kunststoffeder 34 vorgesehen, die für eine Anlage der Gegenwalze 9" an der Walze 1 sorgt. Auch hier kann die Gegenwalze 9", im Falle des Einwurfs eines Fremdgegenstands, entsprechend ausweichen.

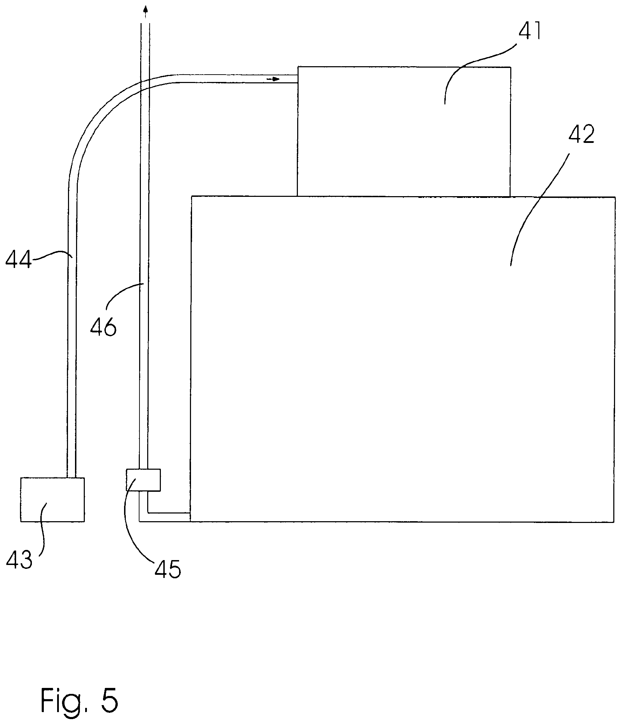

In Fig. 5 ist eine schematische Ansicht eines Ausführungsbeispiels einer Kompaktieranlage gezeigt. Die Kompaktieranlage besteht aus einer Kompaktiereinheit 41 mit einem darunter angeordneten Sammelbehälter 42, welcher das kompaktierte Preßgut 4 aufnimmt. Naturgemäß ist an der Kompaktiereinheit 41 ein entsprechender Einwurf für das Preßgut 4 vorhanden, welcher hier jedoch nicht gezeigt ist. Ebenfalls weist die Kompaktieranlage weitere Elemente auf, wie eine Mikroprozessorsteuerung und entsprechende Antriebe, die jedoch aus Gründen der Übersichtlichkeit hier nicht gezeigt sind. Um eine Keimbildung in der Kompaktieranlage zu vermeiden, ist ein Kühlaggregat 43 über eine Zufuhrleitung 44 mit der Kompaktiereinheit 41 verbunden. Das Kühlaggregat ist so ausgelegt, daß gekühlte Luft über die Zufuhrleitung 44 in die Kompaktiereinheit eingegeben wird. Die gekühlte Luft durchströmt dann die Kompaktiereinheit 41 und den Sammelbehälter 42 durch Konvektion und wird dann am Sammelbehälter durch ein Gebläse 45 abgesaugt. Über eine Abluftleitung 46 wird die Luft dann ins Freie geführt.

Mit dieser Ausgestaltung ist es möglich, durch die entsprechende Kühlung der Kompaktiereinheit 41 und des Sammelbehälters 42, eine Keimbildung innerhalb der Kompaktieranlage zu reduzieren. Um dennoch eine Geruchsbelästigung zu vermeiden wird die entsprechend in die Kompaktiereinheit 41 eingebrachte gekühlte Luft am Sammelbehälter 42 abgesaugt und ins Freie geführt. Naturgemäß sollte die Kompaktieranlage hierzu eine gewisse Dichtigkeit aufweisen, damit die in die Kompaktiereinheit 41 eingebrachte Luft die Anlage nur über die Abluftleitung 46 verläßt.

## Patentansprüche

1. Einheit zum Kompaktieren von Hohlkörpern mit
- einer antreibbaren Walze (1), aufweisend eine Vielzahl von vorstehenden Elementen,
- einer Gegenplatte (9',9",9'") als nicht angetriebenes Gegenlager (9',9",9'") mit mindestens einer Vertiefung, derart angeordnet, daß die vorstehenden Elemente bei Drehung der Walze (1) zeitweise mindestens teilweise in die Vertiefung eingreifen und
- einem im Betrieb in Drehrichtung der Walze (1) dem Gegenlager (9',9",9'") nachgelagerten Abstreifer (6), welcher mindestens eine Vertiefung aufweist in welche die vorstehenden Elemente der Walze (1) im Betrieb zeitweise mindestens teilweise eingreifen,
- wobei die Gegenplatte (9', 9", 9'") federbelastet von einer ersten Position in eine zweite Position bewegbar ist, wenn ein nicht kompaktierbarer Gegenstand in die Einheit (8) eingegeben ist
**dadurch gekennzeichnet, dass**
- die Walze (1) einzelne scheibenförmige Segmente aufweist, die auf einer gemeinsamen Achse in Axialrichtung nebeneinander angeordnet sind und jeweils mindestens ein vorstehendes Element aufweisen.

2. Einheit zum Kompaktieren nach Anspruch 1, wobei die Gegenplatte (9',9'") in Axialrichtung der Walze (1) nebeneinander beabstandete Rillen oder fingerartige Elemente aufweist, in die die vorstehenden Elemente eingreifen.

3. Einheit zum Kompaktieren nach einem der vorangehenden Ansprüche, wobei die vorstehenden Elemente als hakenförmige Schneiden (7) ausgebildet sind.

4. Einheit zum Kompaktieren nach einem der vorangehenden Ansprüche, wobei eine oder mehrere Kunststoffstabfedern (34) aus einem kompressionsfähigen Material auf die Gegenplatte (9', 9", 9'") wirken.

5. Kompaktieranlage mit einer Einheit zum Kompaktieren von Hohlkörpern nach einem der vorangehenden Ansprüche sowie mindestens einem der nachfolgend genannten Elemente:
Zufuhreinrichtung (5), Antrieb, Steuereinrichtung, Detektionseinrichtung, Stromversorgung, Gehäuse, Sammelbehälter (42).

6. Kompaktieranlage nach Anspruch 5, wobei die Kompaktieranlage eine Kühleinrichtung (43) aufweist.

7. Kompaktieranlage nach Anspruch 5 oder 6, wobei die Kompaktieranlage eine Detektionseinrichtung aufweist zur Erkennung, ob ein Hohlkörper eingegeben ist und zur Erkennung des Typs des Hohlkörpers.

## Claims

1. A unit for compacting hollow bodies with:
- a drivable roller (1) having a plurality of projecting elements,
- a counterplate (9', 9", 9'") as a non-driven counter bearing (9', 9", 9'") with at least one recess arranged such that the projecting elements temporarily engage at least partially in the recess upon a rotation of the roller (1), and
- a stripper (6) that, during operation, is downstream from the counterbearing (9', 9", 9'") in the direction of rotation of the roller (1) and has at least one recess in which the projecting elements of the roller (1) at least partially engage temporarily during operation,
- wherein the counterplate (9', 9", 9'") is movable from a first position into a second position in a spring-loaded manner, when an uncompactable object is added to the unit (8),
**characterized in that**
- the roller (1) has individual disk-shaped segments that are arranged adjacent to each other on a common axis in the axial direction and each have at least one projecting element.

2. The unit for compacting according to claim 1, wherein the counterplate (9', 9'") has adjacently spaced grooves or finger-like elements in the axial direction of the roller (1) in which the projecting elements engage.

3. The unit for compacting according to one of the preceding claims, wherein the projecting elements are designed as hook-shaped blades (7).

4. The unit for compacting according to one of the preceding claims, wherein one or more plastic rod springs (34) consisting of a compressible material act on the counterplate (9', 9", 9'").

5. A compacting system with a unit for compacting hollow bodies according to one of the preceding claims, as well as at least one of the elements cited below:
feed apparatus (5), drive, control apparatus, detection apparatus, power supply, housing, and collection container (42).

6. The compacting system according to claim 5, wherein the compacting system has a cooling apparatus (43).

7. The compacting system according to claim 5 or 6, wherein the compacting system has a detection apparatus for detecting whether a hollow body has been added, and for detecting the type of hollow body.

## Revendications

1. Unité de compactage de corps creux, avec
- un cylindre (1) entraînable, présentant une multiplicité d'éléments en saillie,
- une contre-plaque (9', 9", 9'") en tant que contre-appui (9', 9", 9'") non entraîné avec au moins un creux disposé de telle sorte que les éléments en saillie engrènent temporairement au moins partiellement avec le creux lors de la rotation du cylindre (1), et
- un racloir (6) monté en aval du contre-appui (9', 9", 9'") pendant le fonctionnement dans le sens de rotation du cylindre (1) et qui présente au moins un creux dans lequel les éléments en saillie du cylindre (1) engrènent temporairement au moins partiellement pendant le fonctionnement,
- la contre-plaque (9', 9", 9'") étant, chargée par ressort, mobile à partir d'une première position vers une deuxième position si un objet non compactable est introduit dans l'unité (8),
**caractérisée en ce que**
- le cylindre (1) présente des segments individuels en forme de disque qui sont disposés sur un axe commun dans la direction axiale les uns à côté des autres et qui présentent respectivement au moins un élément en saillie.

2. Unité de compactage selon la revendication 1, la contre-plaque (9', 9'") présentant dans la direction axiale du cylindre (1) des rainures ou éléments en forme de doigt juxtaposé(e)s de façon espacée, dans lesquels les éléments en saillie engrènent.

3. Unité de compactage selon l'une des revendications précédentes, les éléments en saillie étant constitués en tant que lames (7) en forme de crochet.

4. Unité de compactage selon l'une des revendications précédentes, une ou plusieurs ressorts plastiques en forme de barre (34), en matériau qui supporte la compression, agissant sur la contre-plaque (9', 9", 9'").

5. Installation de compactage avec une unité de compactage de corps creux selon l'une des revendications précédentes, ainsi qu'avec au moins un des éléments cités ci-dessous :
système d'amenée (5), entraînement, système de commande, système de détection, alimentation électrique, carter, collecteur (42).

6. Installation de compactage selon la revendication 5, l'installation de compactage présentant un système de refroidissement (43).

7. Installation de compactage selon la revendication 5 ou 6, l'installation de compactage présentant un système de détection destiné à détecter si un corps creux est introduit et destiné à détecter le type du corps creux.
